# FASCICULE DE BREVET EUROPEEN

(11) **EP 1 479 012 B1**
(45) Date de publication et mention de la délivrance du brevet: **03.01.2007**
(21) Numéro de dépôt: 03718846.3
(22) Date de dépôt: 05.02.2003
(51) Int. Cl.: G06F 17/30, G06F 17/27

(54) **INDEXATION AUTOMATIQUE DE DOCUMENTS AUDIO-TEXTUELS EN FONCTION DE LEUR DIFFICULTE DE COMPREHENSION**
AUTOMATISCHE INDIZIERUNG VON AUDIO-TEXTLICHEN DOKUMENTEN IN ABHÄNGIGKEIT VON IHRER VERSTÄNDNISSCHWIERIGKEIT
AUTOMATIC INDEXING OF AUDIO-TEXTUAL DOCUMENTS BASED ON THEIR COMPREHENSION DIFFICULTY

(30) Priorité: 08.02.2002 FR 0201602
(43) Date de publication de la demande: 24.11.2004
(73) Titulaire: FRANCE TELECOM, 75015 Paris (FR)
(72) Inventeur: PLU, Michel, 22300 Servel (FR)
(74) Mandataire: Cabinet Martinet & Lapoux
(86) Numéro de dépôt international: PCT/FR2003/000380
(87) Numéro de publication internationale: WO 2003/067464

(56) Documents cités:
- US-A- 5 737 617
- US-A- 5 781 879
- BRADLOW A R ET AL: "Intelligibility of normal speech I: Global and fine-grained acoustic-phonetic talker characteristics" SPEECH COMMUNICATION, ELSEVIER SCIENCE PUBLISHERS, AMSTERDAM, NL, vol. 20, no. 3, 1 décembre 1996 (1996-12-01), pages 255-272, XP004016549 ISSN: 0167-6393
- MAMONE S: "Documentation testing" SOFTWARE ENGINEERING NOTES, ASSOCIATION FOR COMPUTING MACHINERY. NEW YORK, US, vol. 25, no. 2, mars 2000 (2000-03), pages 26-30, XP002954617 ISSN: 0163-5948
- FALTLHAUSER R ET AL: "On-line speaking rate estimation using gaussian mixture models" PROCEEDINGS OF 2000 INTERNATIONAL CONFERENCE ON ACOUSTICS, SPEECH AND SIGNAL PROCESSING, vol. 3, 5 juin 2000 (2000-06-05), pages 1355-1358, XP010507599

## Description

La présente invention concerne l'indexation de documents audio-textuels numériques, et donc y compris de documents audiovisuels numériques, et plus généralement l'indexation de contenus audio-textuels et audiovisuels dans des bases de contenus multimédias afin de rechercher sélectivement certains de ces contenus.

La multitude de chaînes de télévision diffusées à travers des réseaux câblés ou par satellite, ou l'offre de plus en plus grande de documents vidéo accessibles à travers le réseau internet encourage les usagers à consulter de multiples documents audio-textuels et audiovisuels en langues étrangères. La maîtrise et la connaissance de la langue utilisée dans ces documents sont parfois insuffisantes pour apprécier et comprendre ceux-ci.

Les documents audiovisuels sont également utilisés par des enseignants de langue pour concevoir des séances multimédias pour leurs élèves. Ces nombreux documents permettent aux élèves de percevoir la langue telle qu'elle est parlée, avec des sujets divers et d'actualités susceptibles de mieux les motiver. De plus, l'attrait indéniable des images dans les documents audiovisuels accentue la motivation de la pratique et de l'apprentissage d'une langue.

Dans ce cadre d'enseignement des langues, l'adaptation de la difficulté de compréhension des contenus de ces documents par rapport aux compétences de chaque élève et aux objectifs pédagogiques des enseignants est essentielle. Une telle adaptation peut être assistée d'un système de recherche de documents audiovisuels pour choisir des documents en fonction de leurs difficultés de compréhension. La justesse de ce choix avant la visualisation de chaque document d'intérêt est particulièrement importante lorsque la visualisation est payante et/ou nécessite une durée.de téléchargement importante.

Actuellement, la recherche de documents audiovisuels dans des bases de documents multimédia fait appel à l'un de trois systèmes connus.

Dans un premier système de recherche, des documentalistes ou des auteurs de documents étiquettent manuellement les documents par rapport à une nomenclature d'étiquettes souvent spécifique à la base de documents. Cet étiquetage manuel permet d'évaluer et d'indiquer la difficulté de compréhension de chaque document. Toutefois, cet étiquetage nécessite une écoute du document et une saisie qui est trop longue et trop coûteuse relativement à la quantité de documents pouvant être diffusés ou téléchargés à travers des réseaux de télécommunications. En outre, cet étiquetage doit être quasiment permanent puisque la base de documents doit offrir des documents constamment mis à jour ou de nouveaux documents.

Un deuxième système de recherche indexe automatiquement des documents en fonction de mots-clés trouvés dans les sous-titrages textuels des documents audiovisuels, correspondant souvent à une transcription littérale du signal audio de ces documents. Le sous-titrage est bien souvent saisi manuellement bien que des techniques de transcription automatique commencent à apparaître.

Un troisième système de recherche de documents indexe automatiquement les documents avec des signatures caractérisant les signaux constitués par les principales images contenues dans le document.

Ces deux derniers systèmes de recherche de documents ne permettent pas de sélectionner des documents adaptés au niveau de maîtrise et de compréhension de la langue parlée dans les documents audiovisuels par l'usager. L'indexation textuelle dans le deuxième système de recherche ne dépend que de la présence de mots-clés dans la transcription littérale du document, tandis que l'indexation à base de signatures caractéristiques d'images principales extraites du document audiovisuel dans le troisième système de recherche ne permet qu'une recherche par similarité en présentant des images ayant les mêmes caractéristiques que le document recherché.

Le document "Intelligibility of normal speech I: Global and fine-grained acoustic-phonetic talker characteristics" par Bradlow, Torretta et Pisoni, Speech Communication, Vol 20, Nr 3, Décembre 1996, pp 255 - 272 présente une méthode pour calculer un indice d'intelligibilité pour des documents audio basée sur une vitesse d'élocution déterminée à partir du signal audio.

L'objectif de l'invention est de fournir une indexation automatique de documents numériques audio-textuels, voire audiovisuels, reflétant au moins la difficulté de compréhension de ces documents afin qu'un usager puisse sélectionner ce document en fonction de sa compréhension et de ses compétences dans la langue utilisée par les documents.

Pour atteindre cet objectif, un procédé pour indexer un document audio-textuel numérique acquis dans une base de données d'un dispositif de traitement numérique de documents et composé d'un signal de texte et d'un signal audio synchrones, est caractérisé en ce qu'il comprend une analyse de portions textuelles extraites du signal de texte afin notamment de segmenter les portions en des mots et marquer les portions par des bornes temporelles respectives, une évaluation du nombre de syllabes dans les mots de chaque portion analysée, une évaluation de la vitesse d'élocution de chaque portion analysée égale au rapport du nombre de syllabes sur la durée de la portion entre les bornes temporelles de celle-ci afin d'évaluer la vitesse d'élocution du document en fonction des vitesses d'élocution évaluées de portions analysées déterminées, de préférence les portions ayant les plus grandes vitesses d'élocution, une détermination d'un indice de difficulté de compréhensibilité du document en fonction au moins d'un premier indice résultant d'une comparaison de la vitesse d'élocution de document évaluée à au moins un premier seuil, et une formation d'une étiquette du document avec au moins le premier indice et l'indice de difficulté de compréhensibilité dans une base de données du dispositif de traitement de documents.

La vitesse d'élocution dans un document évalué selon l'invention est un indice important dans la détermination de la difficulté de compréhensibilité du document. En effet, même pour des élèves ayant de très bonnes connaissances de la grammaire et du vocabulaire d'une langue, la vitesse d'élocution constitue bien souvent un obstacle à la compréhension d'un document.

Plus généralement, l'indice de difficulté de compréhensibilité d'un document est déterminé en fonction d'une combinaison logique du premier indice et au moins d'un deuxième indice résultant d'une comparaison d'un nombre d'au moins une propriété morpho-syntaxique détectée dans le document à au moins un deuxième seuil.

Comme on le verra dans la suite de la description, un ou plusieurs deuxièmes indices ou un ou plusieurs nombres entrant dans la définition d'un indice et relatifs à une ou plusieurs propriétés morpho-syntaxiques peuvent être inclus dans la combinaison logique. Par exemple, la propriété morpho-syntaxique peut être le nombre au moins d'une forme grammaticale prédéterminée détectée dans le document, ou le nombre d'unités lexicales détectées dans le document et appartenant à au moins un lexique prédéterminé.

L'invention concerne également un dispositif de traitement numérique de documents comprenant un système de gestion de base de données ayant acquis un document audio-textuel composé d'un signal de texte et d'un signal audio synchrones, et un moyen d'indexation pour indexer une étiquette à chaque document audio-textuel numérique. Selon l'invention, le moyen d'indexation comprend un moyen pour analyser des portions textuelles extraites du signal de texte afin notamment de segmenter les portions en des mots et marquer les portions par des bornes temporelles respectives, un moyen pour évaluer le nombre de syllabes dans les mots de chaque portion analysée, un moyen pour évaluer la vitesse d'élocution de chaque portion analysée égale au rapport du nombre de syllabes sur la durée de la portion entre les bornes temporelles de celle-ci, un moyen pour évaluer une vitesse d'élocution du document en fonction des vitesses d'élocution évaluées de portions analysées déterminées, un moyen de détermination d'indice de difficulté de compréhensibilité du document en fonction au moins d'un premier indice résultant d'une comparaison de la vitesse d'élocution du document évaluée à au moins un premier seuil, et un moyen pour former une étiquette du document avec au moins le premier indice et l'indice de difficulté de compréhensibilité dans le système de gestion de base de données. Plus généralement, le moyen de détermination d'indice peut déterminer l'indice de difficulté de compréhensibilité en fonction d'une combinaison logique du premier indice et au moins d'un deuxième indice résultant d'une comparaison d'un nombre d'au moins une propriété morpho-syntaxique détectée dans le document à au moins un deuxième seuil.

Grâce aux étiquettes de l'invention indexées au document, un usager peut rechercher dans le système de gestion de base de données dés documents particuliers en fonction de plusieurs critères de difficulté de compréhensibilité. Par exemple, un enseignant recherche et sélectionne des documents adaptés aux objectifs pédagogiques de son cours et au niveau de ses élèves.

L'invention concerne encore une utilisation du dispositif de traitement numérique de documents selon l'invention, interagissant avec un terminal client éloigné. Le dispositif est caractérisé en ce que le système de gestion de base de données filtre des réponses à des requêtes incluant des critères de sélection de document et transmises par le terminal, en fonction de comparaisons des critères de sélection à des premiers indices représentatifs de vitesses d'élocution de documents évalués dans le dispositif et des indices de difficulté de compréhensibilité contenus dans des étiquettes de documents.

De préférence, le filtrage des réponses par le système de gestion de base de données peut être également fonction d'une indexation préalable des documents audio-textuels dépendant de mots-clés.

Ainsi, un élève ou un enseignant peut baser sa recherche de documents sur une indexation à base de mots-clés ou bien de thèmes, qui est ensuite affinée en fonction de critères de sélection principalement basés sur la compréhensibilité des documents. La recherche sélective de documents dans le système de gestion de base de données peut être fondée successivement sur une recherche thématique telle que la médecine, le sport ou le droit, puis sur l'évaluation de la vitesse d'élocution des documents considérée comme rapide, moyennement rapide ou lente, sur des formes grammaticales particulières incluses dans les documents concernant les modes et/ou les temps de conjugaison et/ou les formes verbales, et sur la difficulté du vocabulaire utilisé par rapport à un ou plusieurs lexiques considérés par exemple comme courant, confirmé et spécialisé.

L'invention offre ainsi des services de recherche de documents audio-textuels et audiovisuels en langue étrangère pour des auditeurs maîtrisant plus ou moins la langue et pour des enseignants ayant des élèves ayant des compétences diverses. Les indices contenus dans les étiquettes indexées aux documents et formées selon l'invention fournissent des informations aux usagers sur les contenus des documents afin de les aider à choisir ceux-ci en fonction de leur maîtrise de la langue des documents.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est un bloc-diagramme d'un système client-serveur pour la recherche de contenus en fonction de l'indexation de documents audio-textuels mise en oeuvre dans le serveur selon l'invention ;
- la figure 2 est un diagramme temporel schématique des composantes textuelle, audio et vidéo d'un signal audiovisuel composite représentatif d'un document ; et
- la figure 3 et un algorithme détaillant la détermination de difficulté de compréhensibilité essentielle à l'indexation selon l'invention.

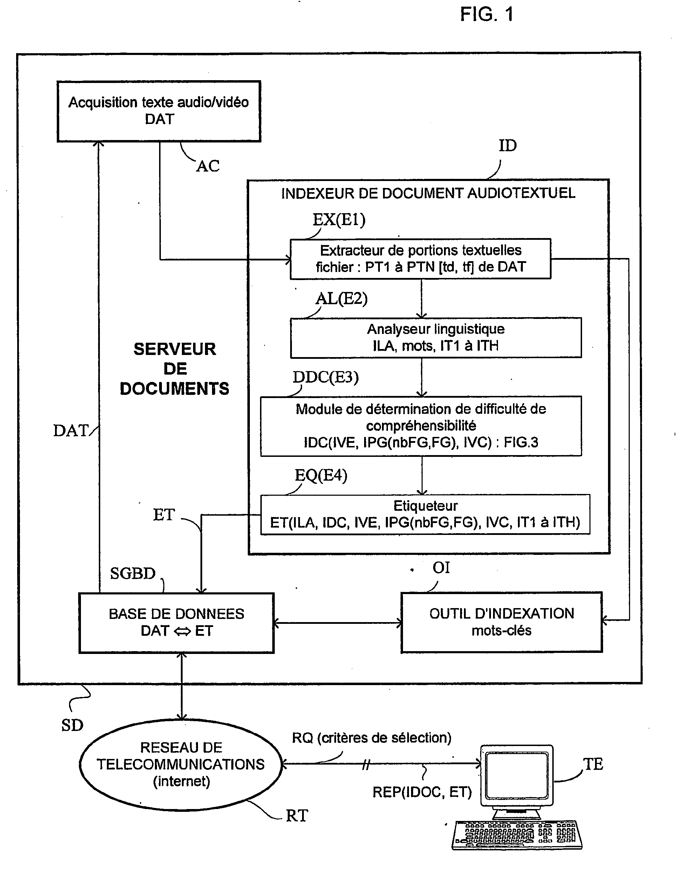

Un système de télécommunications pour l'utilisation de l'indexation de documents audiotextuels selon l'invention présente classiquement une architecture du type client-serveur et comprend, en référence à la figure 1, au moins un terminal d'usager interactif TE et au moins un serveur de traitement de documents audio-textuels SD constituant un site web géré par un administrateur de documents. Le terminal TE est d'un type connu et peut être un ordinateur personnel PC équipé d'un modem ou un terminal intelligent du type récepteur de télévision ou poste de radio notamment. Le terminal d'usager TE et le serveur SD sont reliés d'une manière connue à travers un réseau de télécommunications RT comprenant notamment un réseau d'accès par exemple téléphonique ou radiotéléphonique pour le terminal TE et un réseau de transmission de paquets à haut débit du type internet.

Il est supposé dans la suite de la description que le serveur de documents SD comprend non seulement un système de gestion de base de données SGBD, mais également un indexeur de document audio-textuel ID géré par l'administrateur de documents. Le système SGBD est localisé essentiellement dans une partie du disque dur du serveur et contient des documents au moins audio-textuels DAT indexés selon l'invention et consultables par des usagers depuis leurs terminaux TE à travers le réseau RT. En variante, l'indexeur de document audio-textuel est installé dans un autre serveur qui transmet chaque document indexé selon l'invention avec une étiquette au serveur de documents SD.

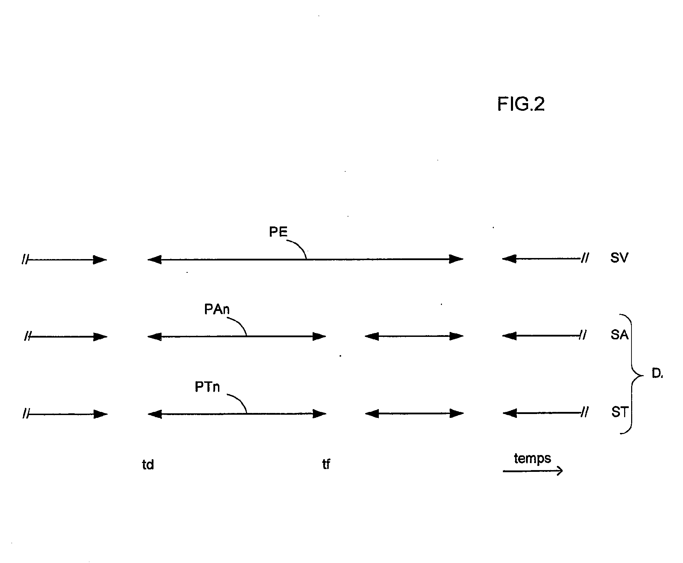

Comme montré à la figure 2, un **document numérique audio-textuel** DAT à indexer comprend en synchronisme un signal de texte ST et un signal audio SA. Cependant, en variante, l'invention concerne également des documents numériques audiovisuels qui comprennent un signal vidéo SV synchrone avec les signaux de texte ST et audio SA et représentatif d'images fixes et/ou animées telles que des séquences vidéo ou des films. A titre d'exemple, un signal audio-textuel DAT selon l'invention est composé d'un signal de texte et d'un signal audio inclus dans un document audiovisuel acquis à travers une carte d'acquisition vidéo AC dans le serveur SD.

Le document audiovisuel est par exemple composé de pages d'écran PE avec des images plus ou moins animées auxquelles des sous-titres PT1 à PTN reproduits par des portions audio PAl à PAN dans une langue prédéterminée et affichés sous forme de portions textuelles PT1 à PTN sont associés. Ainsi, comme montré à la figure 2, une page d'écran PE de la composante vidéo SV du document audiovisuel est associée à au moins une portion audio PAn et une portion analysée textuelle correspondante PTn ayant une durée td - tf.

Les portions audio et textuelles PAn et PTn du document au moins audio-textuel DAT comprennent un ensemble de mots constituant une ou plusieurs phrases par exemple et qui sont prononcées avec une vitesse d'élocution plus ou moins élevée.

Par exemple, la ou les portions textuelles PTn associées à chaque page d'écran PE, c'est-à-dire à chaque image fixe ou animée d'un signal vidéo, sont incluses dans une ou plusieurs lignes de l'intervalle de suppression de trame dans le flux de paquets élémentaires d'un signal vidéo numérique.

Le sous-titrage audio et textuel assiste un usager consultant un tel document dans son terminal TE à apprendre la langue prédéterminée ou à perfectionner ses connaissances dans cette langue. L'administrateur du serveur SD qui peut être lié à un collège de professeurs de langue choisit notamment divers paramètres, tels que des seuils de comparaison à des indices, le nombre et la définition de profils grammaticaux, le contenu de lexiques, et plus généralement la définition d'indices, afin qu'un usager-élève ou un enseignant puisse sélectionner des documents en fonction essentiellement d'un critère de difficulté globale de compréhensibilité de document.

L'indexeur de document audio-textuel ID qui est appelé au niveau application par l'administrateur dans le serveur de documents SD est constitué essentiellement de quatre modules logiciels EX, AL, DDC et EQ pour la mise en oeuvre de quatre étapes principales E1 à E4 de l'indexation de document audio-textuel selon l'invention.

L'**extracteur** EX réalise la première étape E1 pour extraire d'un document DAT transmis par la carte d'acquisition vidéo AC le sous-titrage PT1 à PTN d'un signal composite vidéo ST+SA+SV représentatif d'un document audiovisuel, et donc au moins d'un document audio-textuel DAT, ainsi que les informations de synchronisation liées aux lignes et trames. Le document audio-textuel DAT peut être lu dans le système de gestion de base de données SGBD, comme montré à la figure 1, ou en variante à partir d'un support d'enregistrement ou d'un accès au réseau diffusant le document. Chaque portion textuelle extraite PTn est datée avec l'horloge du serveur SD, c'est-à-dire les bornes temporelles de début et de fin td et tf de la portion analysée PTn sont associées à celles-ci dans un fichier de sous-titrage enregistré dans le disque dur du serveur SD.

A l'étape E2, **l'analyseur linguistique** AL analyse globalement le texte du document DAT et séparément les portions textuelles PT1 à PTN constituant celui-ci afin de fournir différentes informations linguistiques sur le document DAT.

L'analyse linguistique du document comporte essentiellement les six sous-étapes suivantes E21 à E26 qui fournissent des propriétés morpho-syntaxiques et finalement sémantiques du document DAT et qui peuvent être exécutées par exemple au moyen d'un logiciel appelé «Traitement Automatique de la Langue Naturelle» déposé le 26 septembre 2000 sous le numéro 00 40 003 00 à l'Agence de la Protection des Programmes, France :
E21) reconnaissance de la langue du texte du document DAT et fourniture d'un indice de langue ILA ;
E22) élimination de suites de caractères qui ne sont pas liés au texte et qui peuvent être des annotations du sous-titrage lorsqu'elles existent ;
E23) marquage sous forme de mots spéciaux des deux bornes temporelles td et tf de chaque portion textuelle PTn, constituant des données d'horodatage relatives à la synchronisation du texte par rapport aux signaux audio et vidéo ;
E24) segmentation du texte du document DAT en des unités lexicales comprenant principalement des mots et le cas échéant des locutions et des phrases ;
E25) analyse grammaticale et lexicale du texte du document DAT afin de fournir les formes lexicales de base, appelées lemmes, des mots utilisés dans le texte et constituant des entrées de dictionnaire ou de lexique, comme par exemple le verbe à l'infinitif pour un mot correspondant à une conjugaison particulière de ce verbe, les formes grammaticales FG telles que le temps et le mode attachés à chaque verbe et la forme verbale attachée à chaque phrase du texte ;
E26) classification,thématique du document DAT et fourniture d'indices thématiques IT1 à ITH reflétant les divers termes abordés par le texte du document DAT.

La troisième étape E3 est réalisée par le module de **détermination globale de difficulté de compréhensibilité** DDC propre à l'invention. Ce module détermine successivement ou de préférence en parallèle trois indices IVE, IPG et IVC qui contribuent à déterminer un quatrième indice IDC relatif à la difficulté de compréhensibilité du document DAT à indexer et qui dépend d'une combinaison logique des trois indices IVE, IPG et IVC. Ces trois indices sont calculés en fonction de seuils prédéterminés par l'administrateur et dépendent eux-mêmes des résultats de l'analyse linguistique précédente E2.

Selon d'autres variantes, l'indice de difficulté de compréhensibilité IDC est fonction de l'un des indices IVE, IPG et IVC, de préférence fonction de la détermination E5 de l'indice IVE ou dépend d'une combinaison logique de deux des trois indices IVE, IPG et IVC.

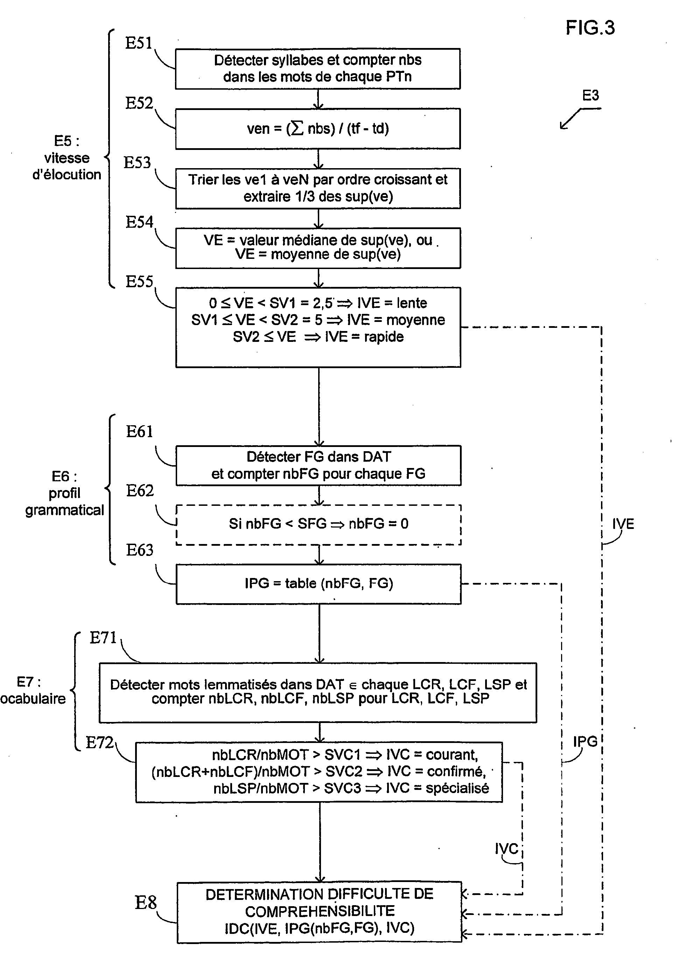

Comme montré à la figure 3, l'étape E3 réalisée par le module DDC est composée d'une détermination E5 d'un indice de vitesse d'élocution IVE, de la détermination E6 au moins d'un indice de profil grammatical IPG sous la forme d'une table, de la détermination E7 d'un indice de vocabulaire IVC, et de la détermination E8 de l'indice de difficulté de compréhensibilité IDC. Les étapes E5, E6 et E7 considèrent des informations linguistiques fournies par l'analyseur linguistique AL à l'étape E2, tandis que l'étape E8 dépend des trois indices déterminés aux étapes précédentes E5, E6 et E7, ou en variante au moins de l'un de ces trois indices.

L'étape E5 comprend essentiellement quatre sous-étapes E51 à E54 pour évaluer la vitesse d'élocution VE du document DAT et une étape E55 pour déterminer l'**indice de vitesse d'élocution** IVE.

L'évaluation de la vitesse d'élocution VE comprend les étapes successives suivantes :
E51) Evaluation du nombre de syllabes nbs dans les mots de chacune des portions analysées PTn résultant de la segmentation à l'étape E24 en détectant les syllabes dans chaque mot et en les comptant dans tous les mots de la portion textuelle. Chaque syllabe correspond à un ensemble de lettres comprenant une ou plusieurs voyelles suivies par au moins une consonne et le nombre de syllabes par mot est augmenté de 1 lorsque le mot est terminé par une voyelle non muette ; par exemple, lorsque l'indice ILA correspond à l'anglais ou le français, la voyelle terminale «e» est toujours considérée comme muette.
E52) La vitesse d'élocution ven de chaque portion analysée PTn du document audio-textuel limitée par les deux bornes temporelles respectives td et tf est évaluée comme le rapport de la somme des nombres de syllabes nbs dans les mots de la portion PTn sur la durée (tf - td) de cette portion.
   Après cette étape, la vitesse d'élocution du document pourrait être évaluée en fonction de toutes les vitesses d'élocution ve1 à veN des portions PT1 à PTN, par exemple en fonction de la moyenne des vitesses d'élocution des portions. Cependant, il est préférable d'évaluer la vitesse d'élocution VE en fonction des plus grandes vitesses d'élocution des portions textuelles afin que l'élève qui lit et écoute le document DAT ne soit pas surpris par des portions de document dont la vitesse d'élocution est nettement plus rapide que celle annoncée par l'indice de vitesse d'élocution IVE.
E53) A cet effet, les vitesses d'élocution précédemment évaluées ve1 à veN sont triées par ordre croissant afin de n'extraire de cette liste un nombre prédéterminé des plus grandes vitesses d'élocution évaluées désignées par sup(ve), le nombre prédéterminé étant par exemple égal au tiers du nombre de vitesses différentes dans les portions textuelles analysées PT1 à PTN du document DAT à indexer.
E54) La vitesse d'élocution VE du document DAT est finalement évaluée comme étant égale à la valeur médiane ou à la moyenne des plus grandes vitesses d'élocution sup(ve) des portions extraites à la sous-étape précédente E53.

L'évaluation de la vitesse d'élocution VE aux sous-étapes précédentes élimine les périodes de pose et les morceaux musicaux contenus dans le document audio-textuel analysé DAT qui ne sont pas représentatifs de la difficulté de la compréhensibilité du texte contenu dans le document DAT. La valeur médiane ou la moyenne calculée à l'étape E54 «atténue» des portions de phrase prononcées exceptionnellement à une très grande vitesse d'élocution.

A la sous-étape suivante E55, l'indice de vitesse d'élocution IVE résulte automatiquement d'une comparaison de la vitesse d'élocution de document VE évaluée à la sous-étape E54 à au moins un premier seuil SV1, SV2.

Par exemple, la vitesse d'élocution évaluée VE est comparée à deux seuils SV1 = 2,5 et SV2 = 5 de sorte que l'indice de vitesse d'élocution IVE présente trois représentations binaires correspondant à une vitesse lente lorsque celle-ci est inférieure au seuil SV1, à une vitesse moyenne lorsque celle-ci est comprise entre les seuils SV1 et SV2 et à une vitesse rapide lorsque celle-ci est supérieure au seuil SV2. Les seuils de comparaison SV1 et SV2 sont définis par l'administrateur du serveur SD dans le fichier de configuration de l'indexeur ID. Ces seuils dépendent de l'indice de langue ILA et de niveaux de maîtrise de la langue par les élèves concernés. Les seuils de comparaison peuvent être calculés automatiquement à partir de documents-échantillons qui ont été sélectionnés auparavant par l'administrateur qui leur a attribué des valeurs de l'indice de vitesse d'élocution IVE et qui sont représentatifs de contenus audiotextuels correspondant aux valeurs de l'indice de vitesse d'élocution.

L'étape E6 pour déterminer **l'indice de profil grammatical** IPG du document audio-textuel DAT à indexer repose sur des propriétés morpho-syntaxiques fournies à la sous-étape E25 et résultant de la détection de formes grammaticales prédéterminées intéressantes FG contenues dans le document DAT et de comptages individuels de ces formes grammaticales. A la sous-étape E61, le module DDC fournit ainsi pour chaque forme grammaticale FG le nombre nbFG de celle-ci trouvée dans le texte PT1 à PTN du document DAT.

Les formes grammaticales prédéterminées FG correspondent à des objectifs pédagogiques d'apprentissage de la langue repérées par l'indice ILA et sont par exemple pour l'anglais les suivantes et/ou des combinaisons de celles-ci :
- les modes de conjugaison tels que le conditionnel, le subjonctif et l'impératif ;
- les temps de conjugaison, tels que le «preterite», le «present perfect», le «plusperfect» et le «future» ; et
- les formes verbales affirmative, négative, active et passive.

Les formes grammaticales FG sont définies par l'administrateur du serveur SD dans le fichier de configuration de l'indexeur ID en dépendance de l'indice ILA de la langue d'élocution du document DAT.

En variante, à la sous-étape E62, les nombres nbFG d'occurrences de forme grammaticale inférieurs à des seuils prédéterminés SFG respectivement spécifiques aux formes grammaticales FG peuvent être supprimées, puisque ces formes grammaticales ne sont pas caractéristiques d'un profil grammatical du document DAT.

A l'étape E63, le module DDC établit une table associant à chaque forme grammaticale intéressante FG le nombre évalué nbFG de cette forme trouvée dans le document DAT. Cette table est plus compacte si la sous-étape E62 est appliquée.

L'étape E7 pour déterminer **l'indice de difficulté de vocabulaire IVC** fait appel à des listes de mots définis par l'administrateur du serveur SD, reflétant des niveaux de difficulté du vocabulaire de la langue d'élocution du document DAT. Les listes de mot constituent par exemple trois lexiques : un lexique courant LCR, un lexique confirmé LCF et un lexique spécialisé LSP. A chaque langue utilisée correspond trois tels lexiques. Les lexiques peuvent être réinitialisés à partir d'une analyse de corpus de textes et d'un classement des mots selon leurs nombres d'occurrences dans les textes. Pour une meilleure représentativité des lexiques, seuls les verbes, les noms, les adjectifs et les adverbes sont conservés dans les lexiques. Par exemple, le lexique courant LCR correspond aux mille premiers mots les plus utilisés dans le corpus de textes, le lexique confirmé LCF contient les 2000 mots suivants les plus utilisés dans le corpus de textes, et le reste des mots du corpus de textes constitue le lexique spécialisé LSP ou très confirmé. Les seuils précédents de 1000 et 2000 peuvent être choisis par l'administrateur à partir de l'évaluation manuelle du contenu de certains documents.

Afin de faciliter l'exploitation des lexiques, les mots dans ces lexiques sont lemmatisés, c'est-à-dire chaque mot est associé à son lemme, et l'intersection des lexiques est vide.

L'étape de détermination **d'indice de vocabulaire** E7 comprend essentiellement deux sous-étapes E71 et E72.

A la sous-étape E71, le module DDC compare chaque mot du document DAT lemmatisé à la sous-étape E25 aux mots lemmatisés contenus dans les trois lexiques LCR, LCF et LSP afin de détecter des mots des lexiques et d'incrémenter d'une unité l'un respectif de trois comptes nbLCR, nbLCF et nbLSP lorsque le mot détecté dans le document DAT appartient au lexique LCR, LCF ou LSP. Le test d'appartenance d'un mot du document DAT dans un lexique est basé sur la forme lemmatisée du mot fournie à la sous-étape E25. Plus généralement, au lieu de comparer des mots entre le document DAT et les lexiques, la propriété morpho-synthaxique représentée par l'indice de vocabulaire IVC est dépendante de la comparaison d'unités lexicales prédéterminées, telles que des mots et/ou lemmes et/ou des élocutions et/ou des ensembles de mots contenus dans le document et appartenant à au moins l'un de lexiques prédéterminés.

A la sous-étape E72, l'indice de vocabulaire IVC résulte de la comparaison des pourcentages nbLCR/nbMOT, (nbLCR+nbLCF)/nbMOT, nbLSP/nbMOT à des seuils respectif SVC1, SVC2 et SVC3. Les nombres nbLCR, nbLCF et nbLSP correspondent aux nombres de mots du document DAT trouvés dans les lexiques LCR, LCF et LSP. "nbMOT" dénote le nombre de mots dans le document DAT déterminé à l'étape E23 par l'analyseur linguistique AL. Selon un exemple préféré, l'indice de difficulté de vocabulaire IVC est déterminé comme courant lorsque le pourcentage relatif au lexique LCR est supérieur au seuil SVC1 = 0,5, comme confirmé lorsque le pourcentage relatif aux lexiques LCR et LCF est supérieur au seuil SVC2 = 0,8, et comme spécialisé dans les autres cas.

Comme pour les seuils de comparaison dans les étapes précédentes E5 et E6, les seuils SVC1, SVC2 et SVC3 sont choisis par l'administrateur dans le fichier de configuration de l'indexeur ID. Ces seuils de comparaison dépendent de l'indice de langue ILA et peuvent être calculés automatiquement à partir de documents-échantillons qui ont été sélectionnés auparavant par l'administrateur qui leur a attribué des valeurs d'indice de difficulté de vocabulaire.

Finalement, à l'étape E8, le module DDC détermine **l'indice de difficulté de compréhensibilité** en fonction des trois indices précédemment déterminés IVE, IPG et IVC. Concernant l'indice de profil grammatical IPG, l'indice IDC peut dépendre d'un ou de plusieurs nombres nbFG relatifs à des formes grammaticales prédéterminées FG. Plusieurs valeurs de l'indice IDC peuvent être déterminées à l'étape E8.

Par exemple, l'indice IDC est considéré comme :
facile si : (IVE = «lente») ET (NON ((IPG [nbFG pour FG = «subjonctif»] > 2) OU (IPG [nbFG pour «conditionnel»] > 2))) ET (IVC = «courant») ;
moyen si (NON (IVE = «rapide»)) ET (NON (IVC = «spécialisé») ;
difficile sinon (valeur par défaut).

Dans les combinaisons logiques ci-dessus, ET, OU et NON sont des opérateurs logiques, et le nombre nbFG pour le mode subjonctif ou conditionnel est comparé à un deuxième seuil ici égal à 2.

En revenant à la figure 1, l'**étiqueteur** EQ forme une étiquette numérique ET à l'étape E4. L'étiquette ET contient les divers indices précités ILA, IDC, IVE, IPG, IVC, IT1 à ITH sous forme numérique codée avec des valeurs entières pour des soucis d'efficacité. L'indice de profil grammatical IPG est représenté par un nombre limité de couples associant un nombre entier de forme grammaticale nbFG et un numéro de valeur du profil grammatical correspondant à la forme grammaticale respective FG. De même, le nombre d'indices thématiques IT1 à ITH déterminé à la sous-étape E26 est limité.

L'étiquette ET ainsi formée par l'étiqueteur EQ est transmise au système de gestion de base de données SGBD de manière à l'associer au document correspondant DAT ainsi indexé et le cas échéant à une adresse permettant à un terminal client de consulter le document.

La **recherche de documents** audio-textuels DAT, voire de documents audiovisuels, dans la base de données SGBD depuis le terminal d'usager TE est réalisée dans un environnement distribué de type client-serveur par l'intermédiaire d'un dialogue de requêtes-réponses classique au moyen d'un frontal dans le serveur SD depuis lequel peut être lancé un script écrit par exemple dans le langage Java afin de construire des pages dynamiques HTML (HyperText Markup Language) pour la recherche de documents. L'indexation de documents dans l'indexeur ID selon l'invention est incluse dans la partie logicielle (Backoffice) du serveur SD inaccessible à l'usager.

Lors d'une recherche d'un document DAT dans le système de base de données SGBD, l'usager précise des critères de sélection correspondant aux indices contenus dans les étiquettes des documents, dans une requête RQ transmise par le terminal TE au serveur SD à travers le réseau RT. En réponse à la requête RQ, le système SGBD compare les critères de sélection avec les indices et retourne au terminal TE un descriptif constitué essentiellement par l'étiquette de chaque document dont les indices correspondent aux critères de sélection. Les descriptifs retournés contiennent les valeurs de tous les indices dans une étiquette d'un document satisfaisant et le cas échéant l'adresse du document. L'interface d'usager implémentée dans le terminal TE met en forme les descriptifs reçus pour les présenter convenablement sur l'écran du terminal à l'usager afin que l'usager sélectionne des documents à télécharger parmi les descriptifs affichés.

En variante complémentaire, le serveur SD contient également un outil logiciel d'indexation automatique de texte OI qui a préalablement indexé tous les textes des sous-titrages ST des documents DAT transmis par l'extracteur EX à l'étape E1 en fonction de mots-clés prédéterminés. Ces mots-clés sont transmis au système de gestion de base de données SGBD. La base de données enregistre des ensembles de mots-clés afin de les associer aux documents DAT respectivement. Dans cette variante, l'usager complète par des mots-clés la requête RQ transmise par le terminal TE au serveur SD. En retour, le système de gestion de base de données SGBD transmet une réponse REP contenant des identifiants IDOC des documents contenant les mots-clés spécifiés et correspondant aux critères de sélection dans la requête RQ. Puis le système de gestion de base de données SGBD transmet une réponse REP contenant les descriptifs des documents satisfaisant les critères précisés par l'usager et dépendant des indices dans les étiquettes correspondant au terminal TE. Après la réception de la réponse REP à la requête RQ, l'interface d'usager dans le terminal TE ne présente à l'usager que les identifiants IDOC et les descriptifs des documents contenus dans la réponse REP. Le descriptif d'un document peut contenir l'adresse du document permettant au terminal de consulter le document.

La présentation des réponses contient des informations relatives à des valeurs d'indices caractérisant chaque document afin de permettre à l'usager de sélectionner, et par exemple de consulter, uniquement des documents qu'il est capable de comprendre ou qui sont adaptés aux objectifs et au niveau des élèves d'une séance pédagogique.

## Revendications

1. - Procédé pour indexer un document audio-textuel numérique acquis dans une base de données (SGBD) d'un dispositif de traitement numérique de documents (SD) et composé d'un signal de texte (ST) et d'un signal audio (SA) synchrones, **caractérisé en ce qu'**il comprend une analyse (E2) de portions textuelles (PT1 à PTN) extraites du signal de texte afin notamment de segmenter les portions en des mots et marquer les portions par des bornes temporelles respectives (td, tf), une évaluation (E51) du nombre de syllabes (nbs) dans les mots de chaque portion analysée (PTn), une évaluation (E52) de la vitesse d'élocution (ven) de chaque portion analysée égale au rapport du nombre de syllabes sur la durée de la portion entre les bornes temporelles (td, tf) de celle-ci afin d'évaluer (E54) la vitesse d'élocution (VE) du document (DAT) en fonction des vitesses d'élocution évaluées de portions analysées déterminées, une détermination (E8) d'un indice de difficulté de compréhensibilité (IDC) du document en fonction au moins d'un premier indice (IVE) résultant d'une comparaison (E55) de la vitesse d'élocution de document évaluée à au moins un premier seuil (SV1 ; SV2), et une formation (E4) d'une étiquette du document avec au moins le premier indice (IVE) et l'indice de difficulté de compréhensibilité (IDC) dans une base de données (SGBD) du dispositif de traitement de documents (SD).

2. - Procédé conforme à la revendication 1, selon lequel les portions déterminées ont les plus grandes vitesses d'élocution évaluées qui sont en nombre prédéterminé, et la vitesse d'élocution (VE) du document (DAT) est la valeur médiane ou la moyenne (E54) des vitesses d'élocution des portions déterminées.

3. - Procédé conforme à la revendications 1 ou 2, selon lequel l'indice de difficulté de compréhensibilité (IDC) est déterminé (E8) en fonction d'une combinaison logique du premier indice (IVE) et au moins d'un deuxième indice (IPG ; IVC) résultant d'une comparaison d'un nombre (nbFG ; nbLCR, nbLCF, nbLSP) d'au moins une propriété morpho-syntaxique détectée dans le document (DAT) à au moins un deuxième seuil.

4. - Procédé conforme à la revendication 3, selon lequel la propriété morpho-syntaxique est une forme grammaticale prédéterminée (FG) détectée dans le document (DAT).

5. - Procédé conforme à la revendication 4, selon lequel la forme grammaticale prédéterminée (FG) est un mode de conjugaison et/ou un temps de conjugaison et/ou une forme verbale.

6. - Procédé conforme à la revendication 5, selon lequel un nombre d'une propriété morpho-syntaxique est le nombre (nbLCR, nbLCF, nbLSP) d'unités lexicales détectées dans le document (DAT) et appartenant à un lexique prédéterminé (LCR, LCF, LSP).

7. - Dispositif de traitement numérique de documents (SD) comprenant un système de gestion de base de données (SGBD) ayant acquis un document audio-textuel (DAT) composé d'un signal de texte (ST) et d'un signal audio (SA) synchrones, et un moyen d'indexation pour indexer une étiquette à chaque document audio-textuel numérique, **caractérisé en ce que** le moyen d'indexation (ID) comprend un moyen (AL) pour analyser des portions textuelles (PT1 à PTN) extraites du signal de texte afin notamment de segmenter les portions en des mots et marquer les portions par des bornes temporelles respectives (td, tf), un moyen (DDC) pour évaluer le nombre de syllabes (nbs) dans les mots de chaque portion analysée (PTn), un moyen (DDC) pour évaluer la vitesse d'élocution (ven) de chaque portion analysée égale au rapport du nombre de syllabes sur la durée de la portion entre les bornes temporelles (td, tf) de celle-ci, un moyen (DDC) pour évaluer une vitesse d'élocution (VE) du document (DAT) en fonction des vitesses d'élocution évaluées de portions analysées déterminées, un moyen (DDC) de détermination d'indice de difficulté de compréhensibilité (IDC) du document en fonction au moins d'un premier indice (IVE) résultant d'une comparaison de la vitesse d'élocution du document évaluée à au moins un premier seuil (SV1 ; SV2), et un moyen (EQ) pour former une étiquette du document avec au moins le premier indice (IVE) et l'indice de difficulté de compréhensibilité (IDC) dans le système de gestion de base de données (SGBD).

8. - Dispositif conforme à la revendication 7, **caractérisé en ce que** le moyen de détermination d'indice (DDC) détermine l'indice de difficulté de compréhensibilité (IDC) en fonction d'une combinaison logique du premier indice (IVE) et au moins d'un deuxième indice (IPG ; IVC) résultant d'une comparaison d'un nombre (nbFG ; nbLCR, nbLCF, nbLSP) d'au moins une propriété morpho-syntaxique détectée dans le document (DAT) à au moins un deuxième seuil.

9. - Dispositif conforme à la revendication 7 ou 8, interagissant avec un terminal-client éloigné (TE), **caractérisé en ce que** le système de gestion de base de données (SGDB) filtre des réponses (REP) à des requêtes (RQ) incluant des critères de sélection de document et transmises par le terminal, en fonction de comparaisons des critères de sélection à au moins des premiers indices .(IVE) représentatifs de vitesses d'élocution (VE) de documents évalués dans le dispositif et des indices de difficulté de compréhensibilité (IDC) contenus dans des étiquettes de documents.

10. - Dispositif conforme à la revendication 9, selon laquelle le système de gestion de base de données (SGDB) filtre les réponses (REP) également fonction d'une indexation préalable (OI) des documents audio-textuels dépendant de mots-clés.

## Claims

1. Method for indexing an audio-textual digital document acquired in a database (SGBD) of a digital document processing device (SD) and composed of a synchronous text signal (ST) and audio signal (SA), **characterized in that** it comprises an analysis (E2) of textual portions (PT1 to PTN) extracted from the text signal especially for segmenting the portions into words and marking the portions by respective time boundaries (td, tf), an evaluation (E51) of the number of syllables (nbs) in the words of each portion analysed (PTn), an evaluation (E52) of the speed of elocution (ven) of each portion analysed equal to the ratio of the number of syllables over the duration of the portion between the time boundaries (td, tf) thereof in order to evaluate (E54) the speed of elocution (VE) of the document (DAT) according to the evaluated speeds of elocution of specified analysed portions, a determination (E8) of a comprehensibility difficulty index (IDC) of the document according to at least a first index (IVE) resulting from a comparison (E55) of the document's evaluated speed of elocution with at least a first threshold (SV1; SV2), and a formation (E4) of a label for the document with at least the first index (IVE) and the comprehensibility difficulty index (IDC) in a database (SGBD) of the document processing device (SD).

2. Method in accordance with Claim 1, according to which the specified portions have the greatest evaluated speeds of elocution predetermined in number, and the speed of elocution (VE) of the document (DAT) is the median or mean value (E54) of the speeds of elocution of the specified portions.

3. Method in accordance with Claims 1 or 2, according to which the comprehensibility difficulty index (IDC) is determined (E8) according to a logical combination of the first index (IVE) and at least a second index (IPG; IVC) resulting from a comparison of a number (nbFG; nbLCR, nbLCF, nbLSP) of at least one morphosyntactic property detected in the document (DAT) with at least a second threshold.

4. Method in accordance with Claim 3, according to which the morphosyntactic property is a predetermined grammatical form (FG) detected in the document (DAT).

5. Method in accordance with Claim 4, according to which the predetermined grammatical form (FG) is a mood and/or a tense and/or a verb form.

6. Method in accordance with Claim 5, according to which a number of a morphosyntactic property is the number (nbLCR, nbLCF, nbLSP) of lexical units detected in the document (DAT) belonging to a predetermined lexicon (LCR, LCF, LSP).

7. Digital document processing device (SD) comprising a database management system (SGBD) having acquired an audio-textual document (DAT) composed of a synchronous text signal (ST) and audio signal (SA), and a means of indexing for indexing a label for each audio-textual digital document, **characterized in that** the means of indexing (ID) comprises a means (AL) for analysing textual portions (PT1 to PTN) extracted from the text signal especially for segmenting the portions into words and marking the portions by respective time boundaries (td, tf), a means (DDC) for evaluating the number of syllables (nbs) in the words of each portion analysed (PTn), a means (DDC) for evaluating the speed of elocution (ven) of each portion analysed equal to the ratio of the number of syllables over the duration of the portion between the time boundaries (td, tf) thereof, a means (DDC) for evaluating a speed of elocution (VE) of the document (DAT) according to the evaluated speeds of elocution of specified analysed portions, a means (DDC) of determining a comprehensibility difficulty index (IDC) of the document according to at least a first index (IVE) resulting from a comparison of the document's evaluated speed of elocution with at least a first threshold (SV1; SV2), and a means (EQ) of forming a label for the document with at least the first index (IVE) and the comprehensibility difficulty index (IDC) in the database management system (SGBD).

8. Device in accordance with Claim 7, **characterized in that** the means of index determination (DDC) determines the comprehensibility difficulty index (IDC) according to a logical combination of the first index (IVE) and at least a second index (IPG; IVC) resulting from a comparison of a number (nbFG; nbLCR, nbLCF, nbLSP) of at least one morphosyntactic property detected in the document (DAT) with at least a second threshold.

9. Device in accordance with Claim 7 or 8, interacting with a remote client terminal (TE), **characterized in that** the database management system (SGBD) filters responses (REP) to requests (RQ) including document selection criteria transmitted via the terminal, according to comparisons of the selection criteria with at least the first indices (IVE) representative of speeds of elocution (VE) of documents evaluated in the device and comprehensibility difficulty indices (IDC) contained in document labels.

10. Device in accordance with Claim 9, according to which the database management system (SGBD) filters the responses (REP) also according to a prior indexation (OI) of the audio-textual documents dependant on key words.

## Patentansprüche

1. Verfahren zum Indexieren eines digitalen audiotextuellen Dokuments, das in einer Datenbank (SGBD) einer Vorrichtung zur digitalen Dokumentenverarbeitung (SD) erfasst wird und aus einem synchronen Textsignal (ST) und einem synchronen Audiosignal (SA) besteht, **dadurch gekennzeichnet, dass** es eine Analyse (E2) von Textabschnitten (PT1 bis PTN), die aus dem Textsignal extrahiert werden, um insbesondere die Abschnitte in Wörter zu segmentieren und die Abschnitte durch jeweilige zeitliche Grenzen (td, tf) zu markieren, eine Abschätzung (E51) der Anzahl von Silben (nbs) in den Wörtern jedes analysierten Abschnitts (PTn), eine Abschätzung (E52) der Sprechgeschwindigkeit (ven) jedes analysierten Abschnitts gleich dem Verhältnis der Anzahl von Silben zur Dauer des Abschnitts zwischen dessen zeitlichen Grenzen (td, tf), um die Sprechgeschwindigkeit (VE) des Dokuments (DAT) in Abhängigkeit von den abgeschätzten Sprechgeschwindigkeiten von bestimmten analysierten Abschnitten abzuschätzen (E54), eine Bestimmung (E8) eines Verständlichkeitsschwierigkeitsindex (IDC) des Dokuments in Abhängigkeit von mindestens einem ersten Index (IVE), der aus einem Vergleich (E55) der abgeschätzten Dokument-Sprechgeschwindigkeit mit mindestens einem ersten Schwellwert (SV1; SV2) stammt, und eine Bildung (E4) eines Kennsatzes des Dokuments mit mindestens dem ersten Index (IVE) und dem Verständlichkeitsschwierigkeitsindex (IDC) in einer Datenbank (SGBD) der Vorrichtung zur Dokumentverarbeitung (SD) aufweist.

2. Verfahren nach Anspruch 1, bei dem die bestimmten Abschnitte die größten abgeschätzten Sprechgeschwindigkeiten haben, die in vorbestimmter Anzahl vorliegen, und bei dem die Sprechgeschwindigkeit (VE) des Dokuments (DAT) der Mittelwert oder der Durchschnitt (E54) der Sprechgeschwindigkeiten der bestimmten Abschnitte ist.

3. Verfahren nach Anspruch 1 oder 2, bei dem der Verständlichkeitsschwierigkeitsindex (IDC) in Abhängigkeit von einer logischen Kombination des ersten Index (IVE) und mindestens eines zweiten Index (IPG; IVC) bestimmt wird (E8), der aus einem Vergleich einer Anzahl (nbFG; nbLCR, nbLCF, nbLSP) mindestens einer morphosyntaktischen Eigenschaft, die im Dokument (DAT) erfasst wird, mit mindestens einem zweiten Schwellwert resultiert.

4. Verfahren nach Anspruch 3, bei dem die morphosyntaktische Eigenschaft eine vorbestimmte grammatikalische Form (FG) ist, die im Dokument (DAT) erfasst wird.

5. Verfahren nach Anspruch 4, bei dem die vorbestimmte grammatikalische Form (FG) ein Konjugationsmodus und/oder eine Konjugationszeit und/oder eine verbale Form ist.

6. Verfahren nach Anspruch 5, bei dem eine Anzahl einer morphosyntaktischen Eigenschaft die Anzahl (nbLCR, nbLCF, nbLSP) von lexikalischen Einheiten ist, die im Dokument (DAT) erfasst werden und zu einem vorbestimmten Lexikon (LCR, LCF, LSP) gehören.

7. Vorrichtung zur digitalen Dokumentenverarbeitung (SD), die ein Datenbank-Verwaltungssystem (SGBD), das ein audio-textuelles Dokument (DAT) erfasst hat, das aus einem synchronen Textsignal (ST) und einem synchronen Audiosignal (SA) besteht, und ein Indexierungsmittel aufweist, um jedes digitale audio-textuelle Dokument mit einem Kennsatz zu indexieren, **dadurch gekennzeichnet, dass** das Indexierungsmittel (ID) ein Mittel (AL) zur Analyse der Textabschnitte (PT1 bis PTN), die aus dem Textsignal extrahiert wurden, um insbesondere die Abschnitte in Wörter zu segmentieren und die Abschnitte durch jeweilige zeitliche Grenzen (td, tf) zu markieren, ein Mittel (DDC) zur Abschätzung der Anzahl von Silben (nbs) in den Wörtern jedes analysierten Abschnitts (PTn), ein Mittel (DDC} zur Abschätzung der Sprechgeschwindigkeit (ven) jedes analysierten Abschnitts gleich dem Verhältnis der Anzahl von Silben zur Dauer des Abschnitts zwischen dessen zeitlichen Grenzen (td, tf), ein Mittel (DDC) zur Abschätzung der Sprechgeschwindigkeit (VE) des Dokuments (DAT) in Abhängigkeit von den abgeschätzten Sprechgeschwindigkeiten bestimmter analysierter Abschnitte, ein Mittel (DDC) zur Bestimmung eines Verständlichkeitsschwierigkeitsindex (IDC) des Dokuments in Abhängigkeit von mindestens einem ersten Index (IVE), der aus einem Vergleich der abgeschätzten Sprechgeschwindigkeit des Dokuments mit mindestens einem ersten Schwellwert (SV1; SV2) resultiert, und ein Mittel (EQ) aufweist, um einen Kennsatz des Dokuments mit mindestens dem ersten Index (IVE) und dem Verständlichkeitsschwierigkeitsindex (IDC) im Datenbank-Verwaltungssystem (SGBD) zu formen.

8. Vorrichtung nach Anspruch 7, **dadurch gekennzeichnet, dass** das Indexbestimmungsmittel (DDC) den Verständlichkeitsschwierigkeitsindex (IDC) in Abhängigkeit von einer logischen Kombination des ersten Index (IVE) und mindestens eines zweiten Index (IPG; IVC) bestimmt, der aus einem Vergleich einer Anzahl (nbFG; nbLCR, nbLCF, nbLSP) mindestens einer im Dokument (DAT) erfassten morphosyntaktischen Eigenschaft mit mindestens einem zweiten Schwellwert resultiert.

9. Vorrichtung nach Anspruch 7 oder 8, die mit einem entfernen Client-Terminal (TE) interagiert, **dadurch gekennzeichnet, dass** das Datenbank-Verwaltungssystem (SGDB) Antworten (REP) auf Anfragen (RQ) filtert, die Dokumentauswahlkriterien umfassen und vom Terminal übertragen werden, in Abhängigkeit von Vergleichen der Auswahlkriterien mit mindestens ersten Indizes (IVE), die für Sprechgeschwindigkeiten (VE) von Dokumenten repräsentativ sind, die in der Vorrichtung abgeschätzt werden, und mit den Verständlichkeitsschwierigkeitsindizes (IDC), die in Dokumentenkennsätzen enthalten sind.

10. Vorrichtung nach Anspruch 9, bei der das Datenbank-Verwaltungssystem (SGDB) die Antworten (REP) ebenfalls in Abhängigkeit von einer vorhergehenden Indexierung (OI) der audiotextuellen Dokumente filtert, die von Schlüsselwörtern abhängt.
